(19) Europäisches Patentamt
European Patent Office
Office européen des brevets

(11) Veröffentlichungsnummer: **0 113 914**
**A1**

(12) # EUROPÄISCHE PATENTANMELDUNG

(21) Anmeldenummer: **83113055.4**

(22) Anmeldetag: **23.12.83**

(51) Int. Cl.³: **H 01 B 3/44**, C 08 L 23/02

(30) Priorität: **12.01.83 DE 3300749**

(43) Veröffentlichungstag der Anmeldung: **25.07.84**
**Patentblatt 84/30**

(84) Benannte Vertragsstaaten: **AT BE DE FR GB IT NL SE**

(71) Anmelder: **BASF Aktiengesellschaft,**
**Carl-Bosch-Strasse 38, D-6700 Ludwigshafen (DE)**

(72) Erfinder: **Koehnlein, Ernst, Dr., Ungsteiner Strasse 4,**
**D-6700 Ludwigshafen (DE)**
Erfinder: **Bauer, Peter, Erich-Kaestner-Strasse 13,**
**D-6700 Ludwigshafen (DE)**

(54) **Verwendung von stabilisierten vernetzbaren Ethylenpolymerisaten zur Herstellung von Elektroisoliermassen.**

(57) Die Erfindung betrifft die Verwendung von homogenen Mischungen aus 100 Gewichtsteilen Ethylenpolymerisat, 0,05 bis 0,2 Gewichtsteilen des Stabilisators 2,2'-Thiodiethyl-bis-[3-(3,5-di-tertiär-butyl-4-hydroxiphenyl)-propionat], 0,05 bis 0,2 Gewichtsteilen des Stabilisators

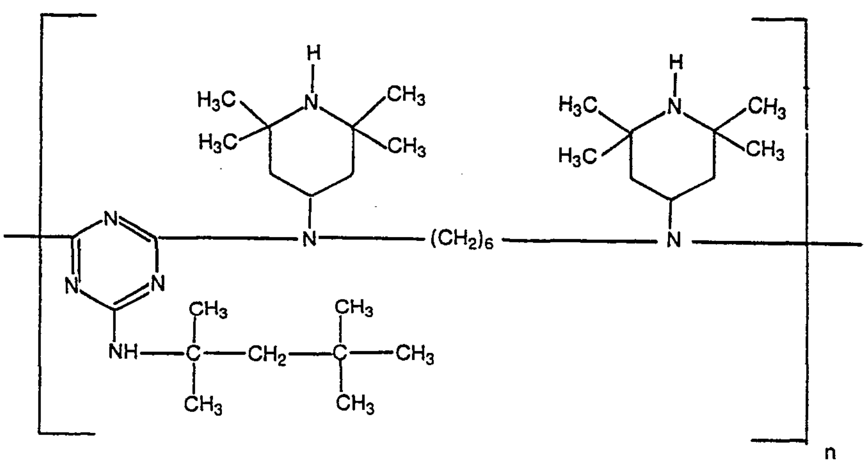

mit 1 < n < 10 und gegebenenfalls 0,7 bis 5,0 Gewichtsteilen eines Vernetzungsmittels oder energiereiche Strahlung zur Herstellung von Elektroisoliermassen.

EP 0 113 914 A1

Verwendung von stabilisierten vernetzbaren Ethylenpolymerisaten zur Herstellung von Elektroisoliermassen

Die Erfindung betrifft die Verwendung von Ethylenpolymerisaten zur Herstellung von Elektroisoliermassen.

Bei derartigen Elektroisoliermassen ist es erforderlich, zur Erhöhung der Wärmebeständigkeit Stabilisatoren einzumischen und die erhaltenen Elektroisoliermassen auf Basis Ethylenpolymerisate, entweder in der Wärme mit einem Vernetzungsmittel aus einer radikalisch zerfallenden organischen Verbindung, oder mit energiereicher Strahlung zu vernetzen.

Zur Erfüllung dieser Erfordernisse ist es bereits bekannt, definierte organische Verbindungen als Wärmestabilisatoren in Ethylenpolymerisate einzumischen und die erhaltenen Mischungen mit üblichen Vernetzungsmitteln, wie organischen Peroxiden, oder durch Bestrahlen zu vernetzen (vgl. US-PS 4 124 655 und DE-OS 2 731 420). Es ist auch bereits bekannt, die Verbindungen 2,2'-Thiodiethyl-bis-[3-(3,5-ditertiärbutyl-4-hydroxiphenyl)-propionat] (I) der chemischen Struktur:

R - S - R

R =

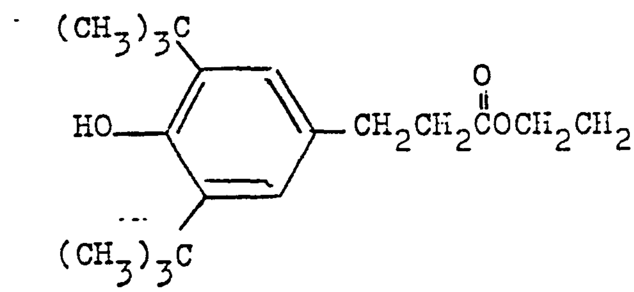

oder eine oligomere Verbindung (II) mit der Strukturformel:

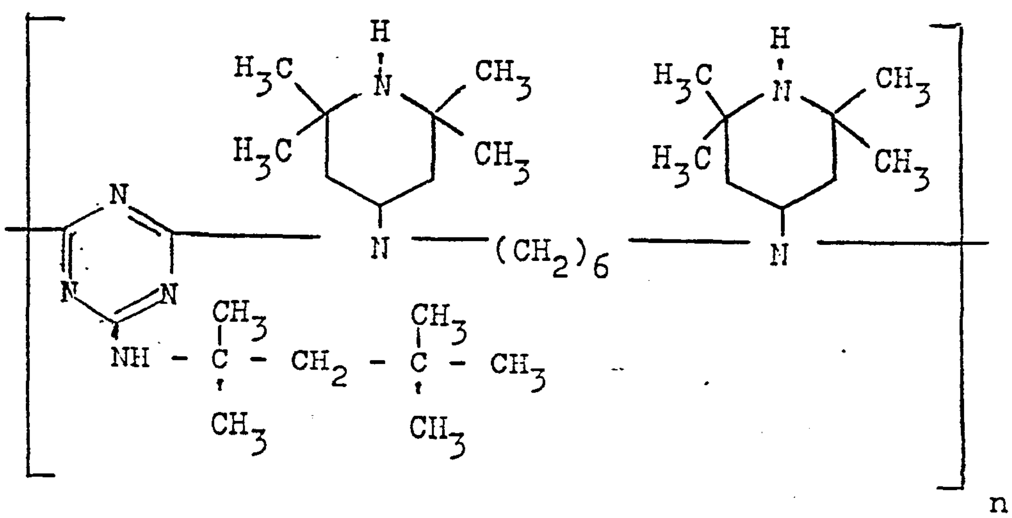

Fre/ro

wobei n = >1 und >10, in Ethylenpolymerisate als Stabilisatoren einzumischen (vgl. DE-AS 26 36 130, EP-PS 13 665 und US-PS 34 94 887).

Es hat sich aber gezeigt, daß jeder der beiden Stabilisatoren (I) und (II) für sich alleine eine bei hohen Temperaturen nicht ausreichende stabilisierende Wirkung zeigt. Dadurch ist es notwendig, hohe Stabilisatorkonzentrationen herzustellen und unerwünscht große Mengen an Fremdstoffen in die Masse einzubringen. Zudem wird der Stabilisator (I) leicht aus der Masse ausgeschwitzt. Der Stabilisator (II) bewirkt in der ersten Phase einer Langzeitalterung einen relativ starken Rückgang der Reißdehnung des Ethylenpolymerisats, und zwar um 15 bis 25 % bei ca. 150°C innerhalb von 10 Tagen.

Aufgabe der vorliegenden Erfindung war es, die oben erwähnten Nachteile zu vermeiden und eine hohe Stabilisierung von Elektroisoliermassen auf Basis von Ethylenpolymerisaten bei Temperaturen über 60°C mit möglichst geringem Fremdstoffgehalt zu erreichen.

Diese Aufgabe wurde erfindungsgemäß durch die Verwendung von homogenen Mischungen aus

a) 100 Gewichtsteilen Ethylenpolymerisat der Dichte 0,917 bis 0,940 $g/cm^3$ und des Schmelzindex 0,5 bis 5 g/10 min,
b) 0,005 bis 0,2 Gewichtsteilen der Verbindung 2,2'-Thiodiethyl-bis-[3-(3,5-di-tertiär-butyl-4-hydroxiphenyl)-propionat] als Stabilisator (I),
c) 0,05 bis 0,2 Gewichtsteilen der oligomeren Verbindung der Strukturformel:

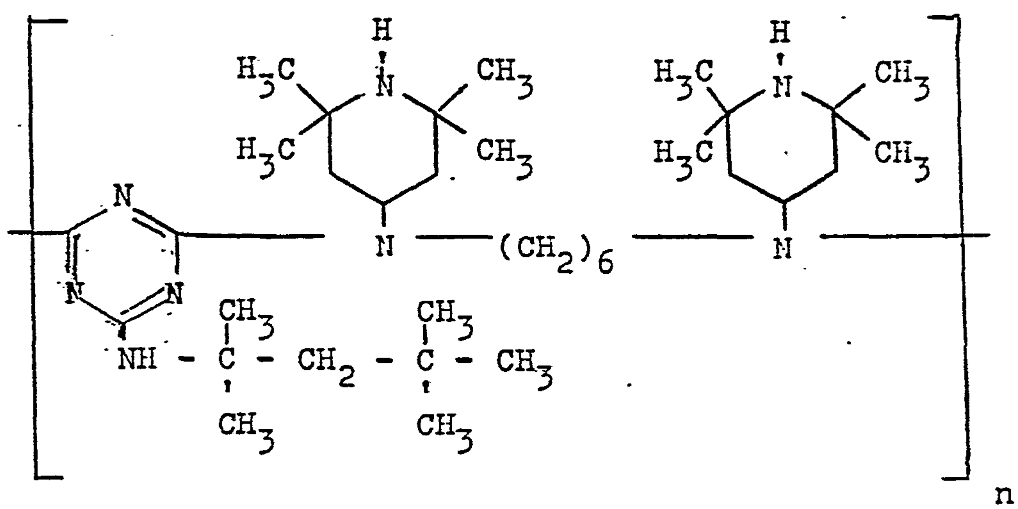

mit $1 < n < 10$ als Stabilisator (II) und

d) gegebenenfalls 0,7 bis 5,0 Gewichtsteilen einer in der Wärme radikalisch zerfallenden organischen Verbindung

gelöst.

Als Vernetzungsmittel kann bevorzugt auch energiereiche Strahlung eingesetzt werden.

Die Herstellung der homogenen Mischungen aus ihren Komponenten kann in einschlägig üblichen Mischvorrichtungen in einschlägig üblicher Weise erfolgen. Auch geeignet ist ein Mischprozeß, bei dem eine flüssige Lösung aus Stabilisator und Peroxid dem Ethylenpolymerisat während seines Formgebungsprozesses zugefügt wird (vgl. FR-PS 24 11 216, DE-OS 24 32 758 und DE-OS 22 20 147).

Unter Ethylenpolymerisaten im Sinne der Erfindung werden Polyethylen und Ethylencopolymerisate verstanden, die weniger als 50 Gewichtsprozent, bevorzugt 10 bis 35 Gewichtsprozent eines Vinylesters einer $C_2$- bis $C_4$-Alkancarbonsäure oder eines $C_1$- bis $C_8$-Alkylesters einer $C_3$- bis $C_4$-Alkencarbonsäure einpolymerisiert enthalten, und deren Dichte 0,917 bis 0,940 g/cm$^3$ (nach DIN 53 479) und Schmelzindex 0,5 bis 5 g/10 min. (nach ASTM-D 1238-70 bei 190°C und 2,16 kg Belastung) ist. Besonders geeignete Ethylenpolymerisate sind Polyethylen, Ethylen-Vinylacetat-, Ethylen-n- oder -tert.-Butylacrylat-Copolymerisate. Derartige Ethylenpolymerisate sind hinlänglich bekannt und können z.B. nach üblichen Hochdruckpolymerisationsverfahren, wie sie beispielsweise in "Ullmanns Encyklopädie der technischen Chemie", 4. Auflage, Band 19, (1980), Seiten 169 bis 178, in der US-PS 3 117 953 oder in der US-PS 4 217 431 beschrieben sind, hergestellt werden.

Das Ethylenpolymerisat enthält auf 100 Gewichtsteile Polymerisat, 0,05 bis 0,2, bevorzugt 0,08 bis 0,15 Gewichtsteile des Stabilisators (I) eingemischt. Der Stabilisator (I) ist wohlbekannt und wird im Handel unter dem Handelsnamen "Irganox 1035$^{(R)}$" angeboten (vgl. Ciba-Geigy Technische Information, Publ. Nr. 770.620/d./Str./10). Er stellt ein mäßig wirksames Antioxidans für Drahtisolierungen und Kabelummantelungen aus Hochdruckpolyethylen dar und ist besonders als Verarbeitungsstabilisator geeignet. Bei längerer Lagerung der damit stabilisierten Polyethylengranulate wird er zum Teil ausgeschwitzt.

Erfindungsgemäß soll die Ethylenpolymerisatmischung neben dem Stabilisator (I) zusätzlich noch 0,05 bis 0,2, bevorzugt 0,08 bis 0,15 Gewichtsteile des Stabilisators (II) mit der oben angegebenen Strukturformel auf 100 Gewichtsteile Ethylenpolymerisat enthalten. Auch der Stabilisator (II) ist allgemein bekannt und wird im Handel unter dem Handelsnamen "Chimassorb 944(R)" angeboten (vgl. Preliminary Product Information der Fa. Ciba-Geigy vom April 1980). Der Stabilisator (II) ist ein Lichtstabilisator, der aufgrund seiner oligomeren Struktur eine geringe Auswanderungsrate und Flüchtigkeit besitzt. Das oligomere Produkt ist ein weißes Pulver mit einem Erweichungsbereich von 110 bis 150°C und einem Molekulargewicht aus dem Zahlenmittel $\bar{M}_n$ von $> 2500$. Gegebenenfalls enthält die Mischung noch 0,7 bis 3,0, bevorzugt 1,0 bis 2,5 Gewichtsteile auf 100 Gewichtsteile Ethylenpolymerisat einer in der Wärme radikalisch zerfallenden Verbindung als Vernetzungsmittel. Geeignete Verbindungen sind organische Peroxide, die bei 180°C eine Halbwertszeit des Zerfalls von 1 bis 5 Minuten und eine Aktivierungsenergie des Zerfalls von 140 bis 170 kJ $\cdot$ $mol^{-1}$ aufweisen. Beispiele für geeignete Peroxide sind: Dicumylperoxid, Tertiärbutylcumylperoxid oder Ditertiärbutylperoxid.

Anstelle der in der Wärme zerfallenden organischen Verbindung kann als Vernetzungsmittel energiereiche Strahlung eingesetzt werden. Als energiereiche Strahlen kommen vorzugsweise Elektronenstrahlen von 1 bis 5 MeV Bestrahlungsspannung in Betracht. Die Dosis liegt zwischen 50 und 400 kGy, die Dosisrate sollte dabei 0,1 bis 20 kGy/s betragen. Die Vernetzung mit energiereichen Strahlen wird nach der Verformung der Mischung zum Elektroisoliermaterial vorgenommen.

Unter Elektroisoliermassen im Sinne der Erfindung werden extrudierbare Kunststoffmassen verstanden, welche bei der Isolierung elektrischer Kabel und Leitungen verwendet werden. Die erfindungsgemäßen Massen sind nach Vernetzung vorzugsweise für Kabel- und Drahtisolierungen im Mittel- und Hochspannungsbereich (20-400 kV) geeignet.

Es ist ein Vorteil bei der Verwendung der erfindungsgemäßen Mischungen, daß bei gleicher Gesamtmenge eingesetzter Stabilisatorsubstanz eine wesentliche Erhöhung der Stabilität erhalten wird, wenn Stabilisator I und II zu gleichen Teilen angewendet werden. Zusätzlich wird der Anteil des Stabilisators I, der nach gegebener Lagerzeit an die Granulatoberfläche wandert, deutlich verringert.

Beispiele

In Polyethylen der Dichte 0,918 $g/cm^3$ und des Schmelzindex von 1,5 g/10 min werden jeweils die in der Tabelle angegebenen Stabilisatormengen und 2,2 Gewichtsprozent Dicumylperoxid eingebracht. Die als Granulat vorliegende Mischung wird

a) bei 200°C und 10 min zu 1 mm dicken Platten gepreßt und dabei vernetzt,

b) bei Raumtemperatur 6 Wochen gelagert und danach zur Bestimmung der an die Oberfläche gewanderten Stabilisatoren mit Aceton abgewaschen.

Die Preßplatten werden in einem Umlufttrockenschrank bei 150°C gelagert. In regelmäßigen Zeitabständen werden Probekörper ausgestanzt und im Zugversuch geprüft. Die Zeit in Tagen bis die Reißdehnung auf die Hälfte gegenüber ungedehntem Material abgesunken ist ($\varepsilon / \varepsilon_0$ mal 100 = 50) ist in Spalte 4 der Tabelle angegeben. Die von der Oberfläche abgewaschene Stabilisatormenge wird in Gewichtsprozent, bezogen auf die Gesamtstabilisatormenge, in Spalte 5 wiedergegeben.

Tabelle

| Beispiel | Stabilisator I Gew.% | Stabilisator II Gew.% | Tage $\varepsilon / \varepsilon_0 \cdot 100 = 50$ | Abgewaschener Stabilisator (Gew.%) |
|---|---|---|---|---|
| 1 | 0,4 | - | (9) versprödet | 21 |
| 2 | - | 0,4 | 40 | 0,7 |
| 3 | 0,2 | 0,2 | 80 | 4,8 |
| 4 | 0,3 | - | (7) versprödet | 19,8 |
| 5 | - | 0,3 | 25 | 0,7 |
| 6 | 0,15 | 0,15 | 60 | 2,6 |
| 7 | 0,10 | 0,10 | 50 | |

Patentansprüche

1. Verwendung von homogenen Mischungen aus

a) 100 Gewichtsteilen Ethylenpolymerisat der Dichte 0,917 bis 0,940 g/cm$^3$ und des Schmelzindex 0,5 bis 5 g/10 min,

b) 0,05 bis 0,2 Gewichtsteilen der Verbindung 2,2'-Thiodiethyl-bis-[3-(3,5-di-tertiär-butyl-4-hydroxiphenyl)-propionat] als Stabilisator (I),

c) 0,005 bis 0,2 Gewichtsteilen der oligomeren Verbindung der Strukturformel:

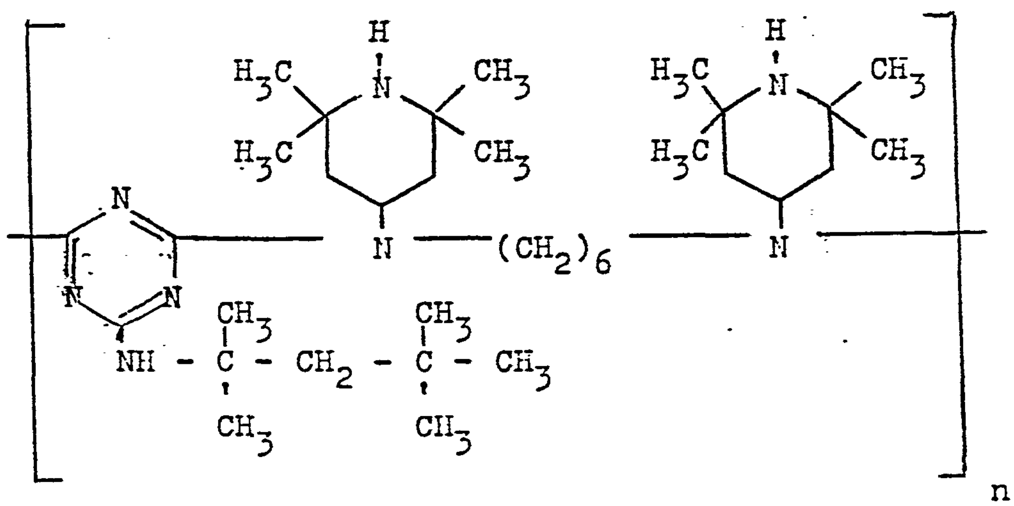

mit $1 < n < 10$ als Stabilisator (II) und

d) gegebenenfalls 0,7 bis 5,0 Gewichtsteilen einer in der Wärme radikalisch zerfallenden organischen Verbindung als Vernetzungsmittel

zur Herstellung von Elektroisoliermassen.

2. Verwendung von Mischungen nach Anspruch 1, dadurch gekennzeichnet, daß man als Vernetzungsmittel energiereiche Strahlung einsetzt.

Europäisches Patentamt

# EUROPÄISCHER RECHERCHENBERICHT

0113914

Nummer der Anmeldung

EP 83 11 3055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CHEMICAL ABSTRACTS, Band 97, Nr. 10, 6. September 1982, Seite 42, Nr. 73328a, Columbus, Ohio, US N.S. ALLEN u.a.: "Photo-stabilizing action of a polymeric hindered piperidine compound in polypropylene film: influence of processing" & POLYM. DEGRAD. STAB. 1982, 4(3), 161-6 | | H 01 B 3/44<br>C 08 L 23/02 |
| | --- | | |
| A | RESEARCH DISCLOSURE, Band 208, 1981, Seite 308, Zusammenfassung Nr. 20807 "Non-discolouring light-stabilizer masterbatches" | | |
| | ----- | | |
| | | | RECHERCHIERTE SACHGEBIETE (Int. Cl. 3) |
| | | | H 01 B 3/00 |

Der vorliegende Recherchenbericht wurde für alle Patentansprüche erstellt.

| Recherchenort | Abschlußdatum der Recherche | Prüfer |
|---|---|---|
| DEN HAAG | 08-03-1984 | STIENON P.M.E. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82